(19) Europäisches Patentamt

European Patent Office

Office européen des brevets

(11) **EP 1 306 796 A1**

(12) # DEMANDE DE BREVET EUROPEEN

(43) Date de publication:
**02.05.2003 Bulletin 2003/18**

(51) Int Cl.⁷: **G06K 9/46**, G06K 9/64, G06K 9/00

(21) Numéro de dépôt: **02354166.7**

(22) Date de dépôt: **21.10.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **23.10.2001 FR 0113676**

(71) Demandeur: **STMicroelectronics S.A.**
**92120 Montrouge (FR)**

(72) Inventeur: **Plaza, Laurent**
**13710 Fuveau (FR)**

(74) Mandataire: **de Beaumont, Michel**
**Cabinet Michel de Beaumont**
**1, rue Champollion**
**38000 Grenoble (FR)**

(54) **Détection d'un motif dans une image numérique**

(57) L'invention concerne un procédé et un système de détection d'un motif dans une image numérique par comparaison successive du contenu de fenêtres courantes (31) de l'image par rapport au contenu d'au moins une fenêtre de référence représentative du motif, la fenêtre de référence contenant des valeurs de variance ou d'écart type de sous-blocs de pixels du motif et les fenêtres courantes contenant des valeurs de variance ou d'écart type de sous-blocs de pixels de l'image, les sous-blocs étant de même taille dans les fenêtres courante et de référence.

Fig 4

## Description

La présente demande concerne de façon générale le traitement d'image numérique. Plus particulièrement, la présente demande concerne la détection, dans une image numérique, d'un motif prédéterminé quelconque.

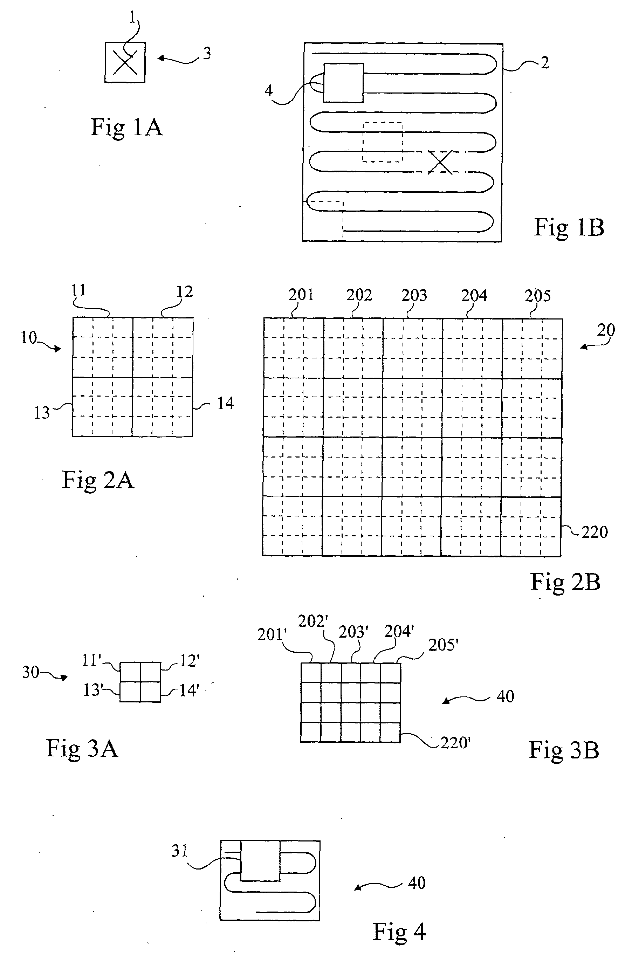

Un procédé connu d'une telle détection est décrit ci-après en relation avec les figures 1A et 1B.

La figure 1A illustre schématiquement un motif 1 dont on souhaite déterminer la présence éventuelle dans une image numérique. La figure 1B illustre une image numérique 2 dans laquelle on recherche le motif 1 de la figure 1A. On suppose, dans cet exemple, que l'image 2 comporte bien le motif 1 et que l'image 2 a des dimensions plus importantes que celles du motif 1.

Pour détecter la présence du motif 1 dans l'image 2, on utilise une image ou fenêtre de référence 3 contenant uniquement le motif 1. La détection est effectuée en balayant l'image 2 avec une fenêtre courante 4 de mêmes dimensions que la fenêtre de référence 3 et en comparant les contenus des deux fenêtres 3 et 4. Une telle comparaison consiste à évaluer le degré de corrélation entre la fenêtre de référence 3 et la fenêtre courante 4. Pour ce faire, on utilise le plus souvent la distance euclidienne pixel par pixel que l'on cumule sur les fenêtres courante et de référence. Plus particulièrement, on calcule pour chaque pixel de la fenêtre courante le carré d'une distance $ED_{i,j}$ définie par la relation suivante :

$$ED^2_{i,j} = (P_{i,j} - R_{i,j})^2,$$

où
$P_{i,j}$ est la valeur de niveau de gris du pixel courant de la fenêtre courante 4, et où $R_{i,j}$ est la valeur de niveau de gris du pixel de la fenêtre de référence de mêmes coordonnées i,j dans la fenêtre de référence 3.

Puis, on somme les carrés des distances $ED_{i,j}$ sur les dimensions verticale M (i étant compris entre 1 et M) et horizontale N (j étant compris entre 1 et N) de la fenêtre courante, pour en déduire la distance euclidienne ED d'une fenêtre par rapport à l'autre. Cela revient à appliquer la formule :

$$ED = \sqrt{\sum_{i=1}^{M} \sum_{j=1}^{N} ED^2_{i,j}} \ .$$

Pour permettre la localisation de mêmes motifs de différentes tailles, la somme ED peut être normalisée. On utilise alors, par exemple, l'énergie des fenêtres courante et de référence. Par énergie d'une fenêtre courante ou de référence, on entend la somme des carrés des niveaux de gris de tous les pixels de la fenêtre considérée.

Pour localiser le motif 1, on calcule la distance euclidienne ED pour toutes les positions possibles de la fenêtre courante dans l'image. Le motif 1 se trouve alors à l'emplacement correspondant à la distance ED minimale.

Un inconvénient de ce procédé réside dans le grand nombre de calculs à effectuer. En effet, en supposant que A est le nombre de lignes de l'image 2, et B le nombre de colonnes de l'image 2, et en supposant que M est le nombre de lignes de la fenêtre de référence 3 et N son nombre de colonnes, le nombre total de calculs est égal au nombre total de pixels de l'image de référence 3, c'est-à-dire le produit MN, par le nombre de positions spatiales possibles pour la fenêtre courante 4, soit M*N* (A-M) * (B-N).

Un autre inconvénient de ce procédé réside dans sa grande sensibilité aux conditions de luminosité lors de l'acquisition de l'image traitée ou de la fenêtre de référence. En effet, comme cela a été exposé précédemment, la recherche de corrélation est basée sur une différence de niveaux de gris. Une variation dans les conditions d'acquisition d'images à traiter peut modifier localement les résultats en provoquant de fausses détections ou de faux rejets.

La présente invention vise à proposer un procédé de détection d'un motif dans une image numérique qui soit plus simple (moins de calculs et moins de mémoire) à mettre en oeuvre que les procédés connus.

La présente invention vise également à proposer un tel procédé qui soit moins sensible aux conditions de luminosité (luminance) de l'image traitée et du motif à détecter.

Pour atteindre ces objets et d'autres, la présente invention prévoit un procédé de détection d'un motif dans une image numérique par comparaison successive du contenu de fenêtres courantes de l'image par rapport au contenu d'au moins une fenêtre de référence représentative du motif, la fenêtre de référence contenant des valeurs de variance ou d'écart type de sous-blocs de pixels du motif et les fenêtres courantes contenant des valeurs de variance ou d'écart type de sous-blocs de pixels de l'image, les sous-blocs étant de même taille dans les fenêtres courantes et de référence.

Selon un mode de réalisation de la présente invention, le procédé comprend les étapes suivantes :

subdiviser l'image et le motif en sous-blocs de mêmes dimensions ;
former une fenêtre de référence contenant les variances ou écarts types des niveaux de gris des pixels de chaque sous-bloc du motif ; et
comparer successivement les valeurs de la fenêtre de référence à des valeurs d'au moins une fenêtre courante, de même taille que la fenêtre de référence, et contenant les variances ou écarts types des niveaux de gris de pixels de sous-blocs de l'image.

Selon un mode de réalisation de la présente invention, les valeurs contenues dans les fenêtres courantes sont calculées au fur et à mesure d'un balayage de l'image.

Selon un mode de réalisation de la présente invention, les valeurs des fenêtres courantes sont toutes calculées avant d'effectuer les comparaisons.

Selon un mode de réalisation de la présente invention, les étapes de subdivision, de formation et de comparaison sont effectuées pour plusieurs tailles de sous-blocs.

La présente invention prévoit également un système de détection d'un motif dans une image numérique, comprenant des moyens pour la mise en oeuvre du procédé selon l'un quelconque des modes de réalisation de la présente invention.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

les figures 1A et 1B illustrent schématiquement un procédé connu de détection d'un motif dans une image numérique ;

les figures 2A et 2B illustrent schématiquement une étape d'un mode de réalisation d'un procédé de détection d'un motif dans une image numérique selon la présente invention ;

les figures 3A et 3B illustrent une étape ultérieure du mode de réalisation des figures 2A et 2B ; et

la figure 4 illustre une étape ultérieure du mode de réalisation des figures 3A et 3B.

Par souci de clarté, les mêmes éléments sont désignés par les mêmes références aux différentes figures.

Un mode de réalisation d'un procédé de détection d'un motif dans une image numérique selon la présente invention sera détaillé ci-après en relation avec les figures 2 à 4.

On considère à titre d'exemple non limitatif qu'on cherche à détecter un motif non représenté (par exemple, similaire au motif de la figure 1A) contenu dans une matrice carrée 10 de six pixels de côté illustrée en figure 2A.

La figure 2B illustre, sous la forme d'une matrice de pixels comportant quinze colonnes et douze lignes, une image numérique 20 dans laquelle on cherche à détecter la présence du motif de la figure 2A.

Comme l'illustrent les figures 2A et 2B, le procédé selon l'invention commence en subdivisant la matrice 10 et l'image 20 en des sous-blocs de mêmes dimensions. À titre d'exemple non limitatif, on considère ici que chaque sous-bloc est un carré de trois pixels de côté. Bien entendu, il peut subsister un problème de bords si l'image ne contient pas un nombre entier de sous-blocs de mêmes dimensions. On peut alors, par exemple et au choix, ne pas tenir compte de pixels de bord de part et d'autre de l'image en recentrant les sous-blocs, traiter le reste comme un sous-bloc de taille plus faible, ou ignorer le bord.

La matrice 10 de la figure 2A est donc subdivisée en quatre sous-blocs de neuf pixels chacun. Pour les besoins de la description, on référence ces quatre sous-blocs de gauche à droite et de haut en bas 11, 12, 13 et 14. On illustre la séparation entre des sous-blocs voisins par des traits pleins. La séparation entre les pixels à l'intérieur de chaque sous-bloc est illustrée en traits pointillés.

De façon similaire, l'image 20 de la figure 2B est subdivisée en vingt sous-blocs de neuf pixels chacun. En figures 2A et 2B, les vingt sous-blocs sont représentés. Toutefois, seuls les cinq de la première ligne et le dernier de la dernière ligne sont référencés 201, 202, 203, 204, 205 et 220.

Ensuite, on calcule pour chaque sous-bloc 11, 12, 13, 14 de la matrice 10, la variance ou l'écart type (racine carrée de la variance) des neuf pixels qu'il comporte.

Le choix entre variance et écart type dépend, par exemple, de la mémoire allouée au stockage. La variance représente des données plus importantes mais économise le calcul d'une racine carrée. Pour simplifier, on fera par la suite référence à la variance, mais toute la description qui suit s'applique également à l'écart type.

La variance V est donnée par la relation :

$$V = \frac{1}{N \cdot M} \sum_{k=1}^{M \cdot N} \left( P_k - \bar{P} \right)^2 \, ,$$

où

$P_k$ représente le niveau de gris du pixel k du sous-bloc contenant N*M pixels, et où $\bar{P}$ représente la moyenne du sous-bloc en termes de niveau de gris, soit :

$$\bar{P} = \frac{1}{N \cdot M} \sum_{k=1}^{M \cdot N} P_k \, .$$

On forme alors une image de référence 30, illustrée en figure 3A, constituée d'autant de pixels que la matrice 10 comporte de sous-blocs. Dans l'exemple considéré, l'image de référence 30 comporte donc quatre pixels 11', 12', 13', 14'. La valeur de chaque pixel de l'image de référence 30 est la variance précédemment calculée du sous-bloc correspondant de la matrice 10.

Selon un premier mode de réalisation de la présente invention, on forme de façon similaire une image réduite 40, illustrée en figure 3B, constituée d'autant de pixels, ici vingt, que de sous-blocs dans l'image numérique à traiter 20. Chacun des vingt pixels 201', 202', 203', 204', 205', 220' de l'image réduite 40 a pour valeur la variance du sous-bloc correspondant de l'image numérique initiale 20.

Comme l'illustre la figure 4, la détection du motif dans l'image numérique 20 consiste alors à balayer l'image réduite 40 avec une fenêtre courante 31 de mêmes dimensions que l'image de référence 30 et à comparer les valeurs de pixel de la fenêtre courante 31 à celles de la fenêtre de référence 30. Cette comparaison est effectuée en calculant la distance euclidienne. Les valeurs comparées sont toutefois des valeurs de variance. En pratique, mais cela ne change rien au principe de l'invention, on tient préférentiellement compte de l'énergie des fenêtres courante et de référence dans les valeurs de variance.

Selon un deuxième mode de réalisation, on subdivise en sous-blocs de mêmes dimensions seulement la matrice 10 comportant le motif à rechercher. La matrice 10 est donc seule convertie de façon à former une image de référence 30. On balaye alors l'image numérique à traiter 20 avec une fenêtre ayant la dimension de la matrice 10. Cette fenêtre de balayage est subdivisée en un même nombre de sous-blocs que l'image de référence 30 compte de pixels (c'est-à-dire de sous-blocs de la matrice 10), soit dans l'exemple précédent 4. On calcule, pour chaque fenêtre de balayage successive de l'image 20, les variances associées à chacun des sous-blocs la composant et on compare les résultats au contenu de l'image de référence 30. La différence par rapport au premier mode de réalisation est que les calculs de variances sont effectués au fur et à mesure du balayage de l'image 20. Le cas échéant, les valeurs sont toutefois mémorisées temporairement pour être réutilisées pour la ou les lignes suivantes.

Un avantage de la présente invention est de réduire la complexité, c'est-à-dire le nombre de calculs primaires ou nombre de boucles par cycle à effectuer pour pouvoir discriminer le motif dans l'image numérique. Ainsi, par rapport au procédé connu décrit précédemment, en considérant des sous-blocs à neuf pixels comme dans l'exemple décrit précédemment, le nombre de calculs est réduit de 9x9 soit 81 fois.

Un autre avantage de la présente invention est qu'en utilisant la variance on devient résistant au niveau de luminosité. En effet, si la luminosité varie de façon uniforme d'une image à l'autre, cette variation est sans effet sur la variance. Ceci ne serait pas le cas si, au lieu de la variance, on utilisait les distances euclidiennes des valeurs des pixels. En effet, si on compare un sous-bloc donné dont huit des neuf valeurs de pixels sont égales à 100 alors que la neuvième valeur est égale à 120, à un sous-bloc dans lequel huit valeurs de pixels sont égales à 120 et une valeur à 140, une comparaison en distances euclidienne fera apparaître une différence de 60 sur la fenêtre, alors qu'une comparaison en termes de variance démontrera une identité entre les deux fenêtres.

Le choix entre les deux modes de réalisation dépend de l'application et notamment si on souhaite privilégier une réduction du nombre de calculs ou de la mémoire requise. Le deuxième mode de réalisation présente l'avantage de nécessiter moins de mémoire. De plus, il permet une interruption de la recherche, donc des calculs, dès que le motif est trouvé.

Le facteur de réduction maximal que l'on peut mettre en oeuvre est lié à l'échelle inférieure admissible appliquée au motif recherché. Cette échelle inférieure définit le nombre maximal de calculs. On notera toutefois qu'il faudra toujours au moins deux pixels pour pouvoir effectuer un calcul de variance. Par conséquent, les sous-blocs présenteront une dimension minimale contenant au moins deux pixels. Une simple réduction par de tels sous-blocs à deux pixels présente toutefois déjà une réduction d'un facteur quatre du nombre de calculs.

Par rapport aux méthodes classiques qui exploitent les différences entre les niveaux de gris pixels à pixels, l'invention exploite la texture du motif et un gradient non-directif des niveaux de gris.

Il conviendra de ne pas utiliser de sous-blocs trop grands. En effet, au-delà d'une certaine dimension, qui peut dépendre du motif et de l'image considérée, bien que le temps de calcul soit considérablement réduit, la variance sera calculée à l'intérieur de chaque sous-bloc sur un trop grand nombre de points présentant des écarts importants et on perdra de la précision. La limite de réduction de l'image dépend, entre autres, des détails caractéristiques du motif.

Le procédé de détection de l'invention peut être appliqué, par exemple, à la localisation exacte d'un visage dans une image numérique dans laquelle ce visage a été prélocalisé grossièrement, par exemple, à partir d'une détection d'une couleur de peau.

De préférence, un procédé selon l'invention est mis en oeuvre successivement pour plusieurs tailles du motif recherché. Le cas échéant, ces différentes tailles correspondent à différentes réductions et conduisent alors à des fenêtres courante et de référence différentes, l'image (40) restant la même. De préférence, on effectue un contrôle en mettant en oeuvre un quelconque des procédés connus de corrélation pour chaque taille du motif d'origine en appliquant ce procédé, niveau de gris à niveau de gris, aux emplacements précis où le procédé de détection de l'invention suggère la présence du motif recherché pour cette taille. Dans ce cas, on applique alors une normalisation des coefficients de corrélation respectifs par rapport à la taille de la fenêtre de référence contenant le motif.

Bien entendu, la présente invention est susceptible de diverses variantes et modifications qui apparaîtront à l'homme de l'art. En particulier, la présente invention n'est pas limitée aux exemples numériques exposés précédemment. La présente invention s'applique à la recherche, dans tout ensemble de données numériques de toute dimension A*B, d'un motif d'une dimension N*M, M étant un nombre de pixels alignés selon une première direction, par exemple verticale, inférieur au nombre homologue A de l'ensemble et N étant un nombre de pixels alignés selon une seconde direction, par exemple horizontale, inférieur au nombre homologue B de l'ensemble traité.

De plus, comme cela a été indiqué précédemment, les dimensions et nombres de pixels des sous-blocs peuvent être modifiés de toute façon appropriée en fonction de l'application. De même, le sens du balayage d'une image numérique par une image de référence 31 n'est indiqué en figure 4 qu'à titre indicatif. Toutefois, les positions des valeurs dans les images réduites (courante ou de référence) doivent correspondre aux positions respectives des sous-blocs dont elles expriment la variance ou l'écart type.

En outre, la mise en oeuvre du procédé de l'invention par des moyens matériels et/ou logiciels est à la portée de l'homme du métier à partir des indications fonctionnelles données ci-dessus.

**Revendications**

1. Procédé de détection d'un motif (10) dans une image numérique (20) par comparaison successive du contenu de fenêtres courantes (31) de l'image par rapport au contenu d'au moins une fenêtre de référence (30) représentative du motif, **caractérisé en ce que** la fenêtre de référence contient des valeurs de variance ou d'écart type de sous-blocs (11', 12', 13', 14') de pixels du motif et les fenêtres courantes contiennent des valeurs de variance ou d'écart type de sous-blocs (201', 202', 203', 204', 205', 220') de pixels de l'image, les sous-blocs étant de même taille dans les fenêtres courantes et de référence.

2. Procédé de détection selon la revendication 1, **caractérisé en ce qu'**il comprend les étapes suivantes :

   subdiviser l'image (20) et le motif (10) en sous-blocs de mêmes dimensions ;
   former une fenêtre de référence (30) contenant les variances ou écarts types des niveaux de gris des pixels de chaque sous-bloc du motif ; et
   comparer successivement les valeurs de la fenêtre de référence à des valeurs d'au moins une fenêtre courante (31), de même taille que la fenêtre de référence, et contenant les variances ou écarts types des niveaux de gris de pixels de sous-blocs de l'image.

3. Procédé selon la revendication 2, **caractérisé en ce que** les valeurs contenues dans les fenêtres courantes sont calculées au fur et à mesure d'un balayage de l'image (20).

4. Procédé selon la revendication 2, **caractérisé en ce que** les valeurs des fenêtres courantes (31) sont toutes calculées avant d'effectuer les comparaisons.

5. Procédé selon l'une quelconque des revendications 2 à 4, **caractérisé en ce que** les étapes de subdivision, de formation et de comparaison sont effectuées pour plusieurs tailles de sous-blocs.

6. Système de détection d'un motif dans une image numérique, **caractérisé en ce qu'**il comprend des moyens pour la mise en oeuvre du procédé selon l'une quelconque des revendications 1 à 5.

1

3

Fig 1A

2

4

Fig 1B

11    12

10

13    14

Fig 2A

201   202   203   204   205

20

220

Fig 2B

30

11'    12'

13'    14'

Fig 3A

201'  202'  203'  204'

205'

40

220'

Fig 3B

31

40

Fig 4

**Office européen des brevets**

# RAPPORT DE RECHERCHE EUROPEENNE

Numéro de la demande

EP 02 35 4166

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | FUJIMOTO K ET AL: "High accurate measurement of micro-joints based on visual matching by correlative variance value IC packaging" EUPAC'98. 3RD EUROPEAN CONFERENCE ON ELECTRONIC PACKAGING TECHNOLOGY AND 9TH INTERNATIONAL CONFERENCE ON INTERCONNECTION TECHNOLOGY IN ELECTRONICS, PROCEEDINGS OF EUPAC'98. 3RD EUROPEAN CONFERENCE ON ELECTRONIC PACKAGING TECHNOLOGY, NUREMBERG, GERMAN, pages 103-107, XP008014614 1998, Dusseldorf, Germany, DVS - German Welding Soc, Germany ISBN: 3-87155-497-9 * page 103, colonne de gauche, alinéas 3,4; figure 1 * * page 104, colonne de gauche, ligne 19 - ligne 30; figure 5 * --- | 1-6 | G06K9/46 G06K9/64 G06K9/00 |
| A | PATENT ABSTRACTS OF JAPAN vol. 1999, no. 08, 30 juin 1999 (1999-06-30) & JP 11 085989 A (CANON INC), 30 mars 1999 (1999-03-30) * abrégé * --- | 1-6 | DOMAINES TECHNIQUES RECHERCHES (Int.Cl.7) G06K |
| A | US 5 805 727 A (NAKANO HIROKI) 8 septembre 1998 (1998-09-08) * colonne 4, ligne 53 - colonne 5, ligne 44; figures 10,11,6 * * colonne 7, ligne 31 - colonne 9, ligne 16 * --- | 1-6 | |
| A | US 6 049 363 A (COURTNEY JONATHAN D ET AL) 11 avril 2000 (2000-04-11) * colonne 3, ligne 11 - ligne 36 * --- | 1-6 | |

-/--

Le présent rapport a été établi pour toutes les revendications

| Lieu de la recherche | Date d'achèvement de la recherche | Examinateur |
|---|---|---|
| LA HAYE | 10 mars 2003 | Granger, B |

EPO FORM 1503 03.82 (P04C02)

**EP 1 306 796 A1**

Office européen
des brevets

**RAPPORT DE RECHERCHE EUROPEENNE**

Numéro de la demande

EP 02 35 4166

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| P,A | PATENT ABSTRACTS OF JAPAN vol. 2002, no. 02, 2 avril 2002 (2002-04-02) & JP 2001 297325 A (MITSUBISHI ELECTRIC CORP), 26 octobre 2001 (2001-10-26) * abrégé * ----- | 1-6 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 10 mars 2003 | Granger, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 35 4166

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-03-2003

| Document brevet cité au rapport de recherche | | Date de publication | Membre(s) de la famille de brevet(s) | | Date de publication |
|---|---|---|---|---|---|
| JP 11085989 | A | 30-03-1999 | AUCUN | | |
| US 5805727 | A | 08-09-1998 | JP | 2630923 B2 | 16-07-1997 |
| | | | JP | 8161497 A | 21-06-1996 |
| US 6049363 | A | 11-04-2000 | EP | 1184810 A2 | 06-03-2002 |
| | | | EP | 0805405 A2 | 05-11-1997 |
| | | | JP | 10084525 A | 31-03-1998 |
| JP 2001297325 | A | 26-10-2001 | AUCUN | | |

EPO FORM P0460